# EUROPEAN PATENT SPECIFICATION

(11) **EP 1 711 330 B1**
(45) Date of publication and mention of the grant of the patent: **15.09.2010**
(21) Application number: 04798983.5
(22) Date of filing: 25.11.2004
(51) Int. Cl.: B29C 55/00, B29C 55/02, B32B 37/28

(54) **PROCESS FOR MAKING A BREATHABLE, ELASTIC POLYOLEFIN FILM**
VERFAHREN ZUR HERSTELLUNG EINER ATMUNGSFÄHIGEN, ELASTISCHEN POLYOLEFINFOLIE
PROCEDE DE FABRICATION D'UN FILM POLYOLEFINIQUE ELASTIQUE RESPIRANT

(30) Priority: 27.11.2003 IT MI20032313
(43) Date of publication of application: 18.10.2006
(73) Proprietor: Nuova Pansac S.p.A., 20124 Milano (IT)
(72) Inventor: LORI, Fabrizio, I-46030 Cerese di Virgilio (IT); BORTOLETTO, Graziano, I-31059 Zero Branco (IT)
(74) Representative: Premru, Rok
(86) International application number: PCT/IB2004/003877
(87) International publication number: WO 2005/051635

(56) References cited:
- EP-B- 1 226 013
- WO-A-01/32116
- WO-A-99/62695

## Description

This invention relates to a process for preparing a breathable elastic polyolefin film, a plant for implementing such process and the use of a mixture of polyolefins and thermoplastic elastomers fox making a breathable elastic film.

Breathable polyolefin films are used in various technical fields, particularly for making products designed to be impervious to liquids while allowing air and vapor to pass therethrough.

WO-A-01/32 116 discloses a single layer breathable elastic film made of thermoplastic elastomer in mixture with filler and olefins, WO-A-99/62 695 discloses an elastomeric material coupled to a liner manufactured from cotton cloth.

From patent EP-B1-1 226 013, in the name of the applicant hereof, to which reference is made for a better understanding of the prior art, a process is known for making breathable polyolefin films by transversely and/or longitudinally stretching a polyolefin film, added with CaCO₃ fillers or equivalent materials.

According to the teaching of patent EP-B1-1 226 013, the polyolefin film to be stretched is obtained from a process which includes the steps of: producing a tubular by blow extrusion squeezing the tubular to obtain two superimposed layers, heating the two superimposed layers to the softening point, pressing the two layers together to strongly join them and cooling the film thus obtained.

The film obtained by this process has the advantage of allowing higher film stretching rates and ratios, without increasing the risk of generating microholes, which might affect the liquid-imperviousness properties of the film.

The breathable polyolefin films that result from the process of patent EP-B1-1 226 013 have further drawbacks.

Particularly, the film may not be easily adapted to the surface to be covered, without risking the rupture thereof, while providing an adequate liquid-tightness.

The object of this invention is to provide a solution to prior art problems and particularly to the above mentioned problem.

Such object is fulfilled thanks to a process according to the principle of claim 1.

Further embodiments of the process may be provided in compliance with the principle of the dependent claims 2 to 9.

The process of the invention will appear more clearly from the following description of a possible embodiment, which is proposed together with a drawing to schematically show a production plant for carrying out the process of the invention.

The process described below uses a mixture of polyethylene, preferably of the LDPE, LLDPE type, styrenic thermoplastic elastomers and fillers, usually CaCO₃-based which make the film porous by stretching thereof.

Nevertheless, other polyethylene- and/or polypropylene-based olefins may be used, which may be obtained by conventional catalysis methods (Ziegler, Ziegler-Natta, Phillips) or metallocene catalysis, particularly polyethylene copolymers having α-olefins with 4 to 10 carbon atoms (1-butene, 1-pentene, 1-hexene, 1-heptene, 1-octene, 4-methyl-1-pentene, etc.).

The amount of added filler also depends on the desired breathability, typically the filler is 30% to 70% by weight of the mixture.

More preferably, the filler is 40% to 50% by weight of the mixture.

Other types of organic or inorganic fillers may be used instead of CaCO₃.

Particularly, the following fillers may be used: clay, kaolin, zeolites, Zn, Al, Ca, CaSO₄, BaSO₄, MgO, Mg (OH)₂, TiO₂.

Preferably, the fillers have an average particle size of 0.5 to 2 µm and are processed to make their surface hydrophobic.

The fillers may be further coated with fatty acids, e.g. stearic acid, to obtain a better dispersion thereof in the polymer.

In accordance with a possible embodiment, the styrenic thermoplastic elastomer may be KRATON® (sold by KRATON POLYMERS RESEARCH S.A. - Avenue Jean Monnet 1- B-1348 Ottignies-Louvain-la-Neuve) or SEPTON® (sold by KURARAY Co.,LTD.- Kuraray Nihonbashi BLDG.,3-1-6, Nihonbashi, CHUO-KU, TOKYO, 103-8254).

The amount of styrenic thermoplastic elastomer may be of 10% to 40% by weight of the mixture.

More preferably, the amount of styrenic thermoplastic elastomer may be of 20% to 30 % by weight of the mixture.

In any case, the amount of styrenic thermoplastic elastomer will be such as to obtain a hysteresis loss value, in the elastic hysteresis diagram, of 30% to 70% (preferably below 40%), between the 1st and the 2nd cycles detected at 50% elongation, and a residual deformation, after two cycles, below 30% (preferably below 10%).

These parameters were obtained from tests that were carried out in standard environment conditions, by using an INSTRON dynamometer, series 5564, over a 3 inch sample, with 100 mm spaced terminals and an elongation rate of 500 mm/minute.

The amount of olefins may vary depending on required elasticity and breathability. Preferably, the amount of olefins may be of 10 % to 50 % by weight of the mixture.

More preferably, the amount of olefins may be of 25 % to 38 % by weight of the mixture.

Yet more preferably, the amount of olefins may be of 27 % to 34 % by weight of the mixture.

Referring to the ranges of weight percentages of the three components of the mixture (olefins, styrenic thermoplastic elastomer and filler), it shall be understood that any weight variation of a component implies an equal and contrary weight variation of at least another component, so that the sum of weight percentages is always 100%.

In a possible embodiment of the process, the weight percentages are substantially as follows: 27% olefins, 27% styrenic thermoplastic elastomer and 46% fillers.

This mixture is blow extruded by means of a round head extruder 1, thereby obtaining a tubular 10.

The temperature of the tubular 10 that is fed by the extruder 1 is of 150 to 230°C and preferably of 170 to 190°C.

The blowing ratio of the tubular 10 may be of 1:2 to 1:4 and preferably of 1:3.

The blow extrusion tubular 10 is further calendered.

Particularly, the tubular 10 is fed, at a temperature of about 80 to 120°C, and more preferably of about 100°C, into a first calender 2, in which it is pressed and extended until it assumes a web shape 11, formed by two superimposed layers, whose width is half the circumference of the tubular and whose thickness is twice the thickness of the tubular.

The provision of two superimposed layers reduces the risk that, during the subsequent stretching step, the film may be damaged, i.e. that it may have areas with an imperfect liquid imperviousness.

In fact, the possibility that the film may be torn at the same position on both layers is extremely rare.

The calender 2 which is used to stretch-thin the tubular 10 has a pair of mated smooth rollers, the former being made of chromium plated steel and the latter being made of rubber with a hardness of 60 to 80 shores: the pressure exerted by the calendar roller 2 on the compressed tubular 10 is of 5 to 10 kg/cm².

After being flattened, the film 1 is heated to the softening point.

This temperature depends on the type of extruded mixture, and may be indicatively of 80 to 130°C, more preferably of about 100°C.

Such heating process assists removal of moisture or low-evaporation point additives in the extrusion mixture.

Furthermore, such heating process assists the removal of microstrains in the film, which are caused by the previous steps of the process and provides for a more uniform internal film structure.

Thus, subsequent stretching is uniform all over the film.

Heating is obtained by first feeding the film 11 between heated rollers 3, having a temperature of about 60 to 100°C, and then passed near infrared lamps 4 which further increase temperature to the softening point.

In fact, by only using hot rollers - normally heated by water or oil - the softening point can hardly be reached if it is ever reached at all.

Furthermore, IR lamps provide the advantage of heating the air layer around the film (typically to 300 to 400°C), thereby allowing to completely remove residual moisture from the film 11.

After heating, the film is pressed once again by a calender 5 and cooled to a temperature of 8 to 30°C.

Such cooling process preferably occurs by contact with one of the rollers of the calender 5, which is kept at a constant temperature of 8 to 30°C.

Thanks to roller compression, this additional calendering step allows to strongly join the two original layers, and to prevent any delamination of the film obtained from the above, and the thermal shock produced in the film allows to stop the stabilization process.

In this step, the film may be optionally embossed for aesthetic purposes, without altering its basic weight.

The thermal shock produced in the film was found to provide it with a better breathability during the next stretching step.

Film compression is obtained by combining a chromium-plated steel roller and a rubber roller (having a hardness of 60 to 80 shores).

After the stabilization step, the film 11 is stretched in the transverse and/or longitudinal direction.

To this end, appropriate means 6, 8 are provided for stretching the film in the transverse and/or longitudinal direction of the film.

Obviously, these stretching steps may be inverted.

Preferably, extending rollers 7 are provided between transverse stretching means 6 and longitudinal stretching means 8, to remove the folds generated by the first stretching process.

Typical longitudinal stretching ratios range from 1:1.5 to 1:4, with a most preferred ratio of 1:3.5.

Similarly, transverse longitudinal stretching ratios range from 1:1.5 to 1:2.5.

Nevertheless, if required, stretching may even reach a ratio of 1:4.

Within such ranges, vapor permeability levels may be obtained of 500 to 10000 (g/m²) 24h, detected by using a Mocon - Permatran W instrument, model 100K, with the INDA IST 70.4 method (99).

After being transversely and/or longitudinally stretched, the film 11 passes through a stretch stabilizing station to minimize film snapback.

Hence, when a succession of operations are performed on the surface of the stretched film, any undesired shrinking or wrinkling effect is prevented.

According to a possible known embodiment, cold stabilization may be carried out by passing the film between two rollers, which are maintained at a temperature of 8° to 30°C.

Once the film has been stretched, it can undergo any known surface processing.

After surface processing, if any, the film 11 may be conveyed to a consumer system or wound by a reeling machine 9 for storage.

The extruded film has a high surface adhesiveness, which would actually prevent the roll from being unwound without damaging the film.

Therefore, before winding the film into a roll, a separating material is applied on the extruded film 11, to prevent any direct contact between contiguous turns of the roll.

To this end, a special station 12 is provided for coupling the stretched elastic film 11 with the separation material.

Thus, the turns of the roll 18 may be successively unwound without incurring in any problem associated to the adhesion of the film to itself.

According to a first possible embodiment, the separating layer has a continuous structure.

Typically, this layer is a film made of paper or nonwoven fabric which may be coupled to the film with or without interposing adhesive means therebetween, depending on the end use of the film.

Adhesive means may be delivered by means of a special device 14.

Alternatively, the separation material has a discontinuous structure.

In this case, it may be made of a powdery material applied to the surface of the extruded film.

Usable powdered materials include, for instance, talc, plaster or marble.

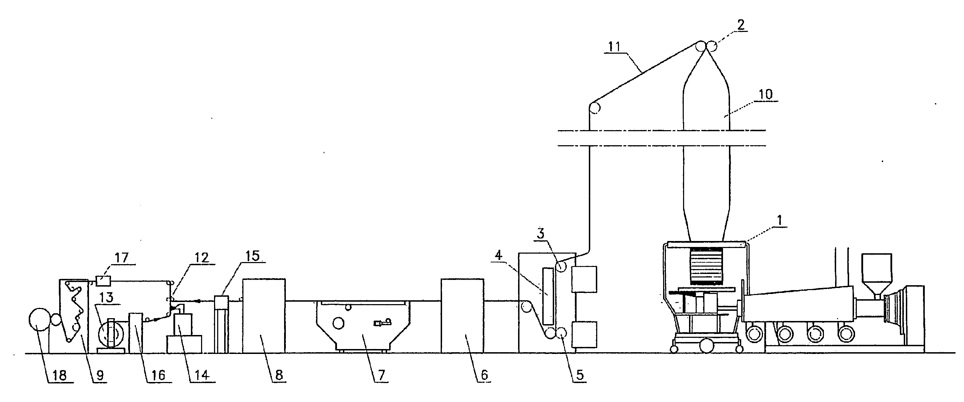

## Claims

1. A process for preparing breathable, elastic polyolefin films, including the steps of:
- producing a tubular by blow extruding a mixture of olefins, styrenic thermoplastic elastomers and filler to facilitate the generation of porosity by stretching;
- squeezing the tubular to obtain a flat film composed of two superposed layers;
- heating the flat film to the softening point;
- pressing the flat film in order to join the two original layers together;
- cooling the flat film to a temperature of 8 to 30°C;
- stretching the film in the transverse and/or longitudinal directions to make it breathable.

2. A process as claimed in claim 1, further comprising the steps of:
- coupling a separating material to the breathable elastic film;
- winding the film coupled with the separating material, into a roll.

3. A process as claimed in claim 1 or 2, wherein said mixture comprises 30% to 70% by weight fillers, 10% to 40% by weight styrenic thermoplastic elastomers and 10% to 50% by weight olefins.

4. A process as claimed in claim 1, 2 or 3, wherein said separating material has a continuous structure.

5. A process as claimed in claim 4, wherein said separating material is a paper or nonwoven fabric film.

6. A process as claimed in claim 5, wherein said paper or nonwoven fabric film is coupled to said extruded film by an adhesive.

7. A process as claimed in claim 5, wherein said paper or nonwoven fabric film is coupled to said extruded film (11) without using adhesives.

8. A process as claimed in claim 1, 2 or 3, wherein said separating layer has a discontinuous structure.

9. A process as claimed in claim 8, wherein said separating layer is made of a powdered material.

## Patentansprüche

1. Verfahren zum Anfertigen einer atmungsaktiven, elastischen Polyolefinfolie, beinhaltend die Schritte:
- Herstellung eines Schlauchs durch Blasextrudieren eines Gemischs von Olefinen, styrenischen thermoplastischen Elastomeren und Füllmaterial zum Fördern der Erzeugung von Porosität beim Dehnen;
- Zusammendrücken des Schlauchs um eine Flachfolie mit zwei überlagerten Schichten zu erhalten;
- Erhitzen der Flachfolie bis zum Erweichungspunkt;
- Pressen der Flachfolie, um die beiden ursprünglichen Schichten miteinander zu verbinden;
- Abkühlen der Flachfolie auf eine Temperatur von 8 bis 30 °C;
- Dehnen der Folie in Quer- und/oder Längsrichtung, um die Folie atmungsaktiv zu machen.

2. Verfahren nach Anspruch 1, weiter aufweisend die Schritte:
- Ankoppeln von Trennmaterial an die atmungsaktive elastische Folie;
- Aufwickeln der an das Trennmaterial gekoppelten Folie auf eine Rolle.

3. Verfahren nach Anspruch 1 oder 2, wobei das Gemisch 30 bis 70 Gewichtsprozent Füllmaterialien enthält, 10 bis 40 Gewichtsprozent styrenische thermoplastische Elastomere und 10 bis 50 Gewichtsprozent Olefine enthält.

4. Verfahren nach Anspruch 1, 2 oder 3, wobei das genannte Trennmaterial eine kontinuierliche Struktur aufweist.

5. Verfahren nach Anspruch 4, wobei das genannte Trennmaterial Papier oder eine Vliesstoffschicht ist.

6. Verfahren nach Anspruch 5, wobei das genannte Papier oder die Vliesstoffschicht mittels eines Klebstoffs an die genannte extrudierte Folie angekoppelt wird.

7. Verfahren nach Anspruch 5, wobei das genannte Papier oder die Vliesstoffschicht ohne die Verwendung von Klebstoff an die extrudierte Folie (11) angekoppelt wird.

8. Verfahren nach Anspruch 1, 2 oder 3, wobei die genannte Trennschicht eine diskontinuierliche Struktur hat.

9. Verfahren nach Anspruch 8, wobei die genannte Trennschicht aus einem pulverisierten Material hergestellt ist.

## Revendications

1. Procédé de préparation de films polyoléfiniques élastiques respirants, comprenant les étapes de :
- production d'un corps tubulaire par extrusion en bulle d'un mélange d'oléfines, d'élastomères thermoplastiques styréniques et d'une charge, afin de faciliter la crémation d'une porosité par étirage ;
- aplatissement du corps tubulaire afin d'obtenir un film plat composé de deux couches superposées ;
- chauffage du film plat jusqu'au point de ramollissement ;
- compression du film plat afin d'unir les deux couches de départ ;
- refroidissement du film plat à une température de 8 à 30°C ;
- étirage transversal et/ou longitudinal du film, afin de le rendre respirant.

2. Procédé selon la revendication 1, comprenant par ailleurs les étapes de :
- couplage d'un matériau séparateur au film élastique respirant ;
- enroulement en bobine du film couplé au matériau séparateur.

3. Procédé selon la revendication 1 ou 2, dans lequel ledit mélange comprend 30% à 70% en poids de charges, 10% à 40% en poids d'élastomères thermoplastiques styréniques et 10% à 50% en poids d'oléfines.

4. Procédé selon la revendication 1, 2 ou 3, dans lequel ledit matériau séparateur a une structure continue.

5. Procédé selon la revendication 4, dans lequel ledit matériau séparateur est du papier ou un film de non-tissé.

6. Procédé selon la revendication 5, dans lequel ledit papier ou film de non-tissé est couplé audit film extrudé par un adhésif.

7. Procédé selon la revendication 5, dans lequel ledit papier ou film de non-tissé est couplé audit film extrudé (11) sans l'emploi d'adhésifs.

8. Procédé selon la revendication 1, 2 ou 3, dans lequel ladite couche séparatrice a une structure discontinue.

9. Procédé selon la revendication 8, dans lequel ladite couche séparatrice est réalisée avec un matériau en poudre.
